**Europäisches Patentamt**

**European Patent Office**

**Office européen des brevets**

(19)

(11) Veröffentlichungsnummer : **0 111 145
B1**

(12) **EUROPÄISCHE PATENTSCHRIFT**

(45) Veröffentlichungstag der Patentschrift :
**20.01.88**

(21) Anmeldenummer : **83110876.6**

(22) Anmeldetag : **31.10.83**

(51) Int. Cl.⁴ : **F 16 J 13/10**

(54) **Druckgefäss mit einer flanschartigen Öffnung.**

(30) Priorität : **12.11.82 US 440886**

(43) Veröffentlichungstag der Anmeldung :
**20.06.84 Patentblatt 84/25**

(45) Bekanntmachung des Hinweises auf die Patenterteilung : **20.01.88 Patentblatt 88/03**

(84) Benannte Vertragsstaaten :
**DE FR GB IT**

(56) Entgegenhaltungen :
**DE-C- 1 237 035
GB-A- 1 430 353
US-A- 2 818 197
US-A- 3 216 745**

(73) Patentinhaber : **COMBUSTION ENGINEERING, INC.
1000 Prospect Hill Road Box 500
Windsor Connecticut 06095-0500 (US)**

(72) Erfinder : **Hill, Frank P., Jr.
1000 Crown Point Road E.
Signal Mountain Tennessee 37377 (US)**
Erfinder : **Alden, John W., Jr.
3727 Skylark Trail
Chattanooga Tennessee 37416 (US)**
Erfinder : **Williams, Harry K.
4300 Ivory Avenue
Signal Mountain Tennessee 37377 (US)**

(74) Vertreter : **Mehl, Ernst, Dipl.-Ing. et al
Postfach 22 01 76
D-8000 München 22 (DE)**

## Beschreibung

Die Erfindung bezieht sich auf ein Druckgefäß mit mindestens einer flanschartigen Öffnung und einer die Öffnung verschliessende Abdeckplatte mit einer Dichtung zwischen der Abdeckplatte und der flanschartigen Öffnung und mit die Abdeckplatte gegen die flanschartige Öffnung und die Dichtung pressenden Spannschrauben, wobei eine zusätzliche Spannvorrichtung vorgesehen ist, die mit einem vorstehenden Rand der Abdeckplatte und einer ringförmigen Einkerbung am Rand der flanschartigen Öffnung in Eingriff bringbar ist, wobei die Spannvorrichtung mehrere den vorstehenden Rand der Abdeckplatte und die ringförmige Einkerbung am Rand der flanschartigen Öffnung miteinander verbindende Klammern beinhaltet.

Solche flanschartigen Öffnungen werden an Druckgefäßen zur Inspektion und Wartung verwendet. Sie können bei größeren Gefäßen Abmessungen erreichen, die den Einstieg von Personen ermöglichen. Die diese flanschartigen Öffnungen verschließenden abnehmbaren Abdeckplatten können bei Druckgefäßen durch den Innendruck herausgedrückt werden. Dies kann zu Verletzungen bei herumstehenden Personen führen. Die potentielle Gefahr wächst naturgemäß mit dem Innendruck. Druckgefäße mit besonders hohem Innendruck sind beispielsweise Dampferzeuger von Kernkraftwerken.

Bei einer Anordnung gemäß der US-A-3 216 745 ist die Abdeckplatte an einer derartigen Öffnung durch eine zusätzliche, formschlüssige Vorrichtung gesichert. Diesem Zweck dienen Klammern, die erst nach dem Zusammenpressen des Flansches der zu verschließenden Öffnung mit einer Abdeckplatte montierbar sind und die dann nach dem Einschrauben von Spannschrauben in ihrer Betriebslage gehalten werden. Diese Anordnung erfordet daher zum Zusammenpressen des Flansches mit der Abdeckplatte eine Montagehilfseinrichtung, die beispielsweise an einer unteren Kalotte eines druckwasserbeheizten Dampferzeugers in einem Kernkraftwerk nicht einsetzbar ist.

Der Erfindung liegt daher die Aufgabe zugrunde für Druckgefäße der eingangs genannten Art eine Verschlußanordnung zu schaffen, die einerseits ohne Hilfseinrichtungen montierbar ist und die andererseits zwei vollkommen unabhängig voneinander wirkende Halteeinrichtungen für eine Abdeckplatte umfaßt.

Bei einem Druckgefäß der eingangs genannten Art werden daher erfindungsgemäß die Klammern von einem gemeinsamen Rückhaltering umfaßt und ist der Rückhaltering mit Gewindelöchern für zusätzliche Schrauben versehen, die die Klammern in die ringförmige Einkerbung am Rand der flanschartigen Öffnung und über den vorstehenden Rand der Abdeckplatte pressen.

Diese Konstruktion kommt mit verhältnismäßig einfachen Bausteinen aus und läßt sich durch bloßes Vergrößern der Klammerfläche an die verschiedensten Betriebsdrücke anpassen. Außerdem werden die am Rand des Flansches und der Abdeckplatte geführten Klammern in einfacher Weise gesichert. Zugleich wird durch die im Rückhaltering eingebrachten Gewindelöcher sichergestellt, daß insbesondere schmale Klammern in den durch die Gewindelöcher vorgegebenen äquidistanten Abstand über den Umfang des Randes der Abdeckplatte und des Flansches hinweg angeordnet werden.

Weitere Einzelheiten der Erfindung werden anhand der Figuren an einem Ausführungsbeispiel erläutert. Es zeigen :

Fig. 1 einen Schnitt durch den unteren Teil eines Dampferzeugers und die dort angebrachten Inspektionsöffnungen.

Fig. 2 eine vergrößerte Darstellung einer Inspektionsöffnung aus der Sicht der Linie II/II der Fig. 1 und

Fig. 3 einen Schnitt längs der Linie III/III der Fig. 2.

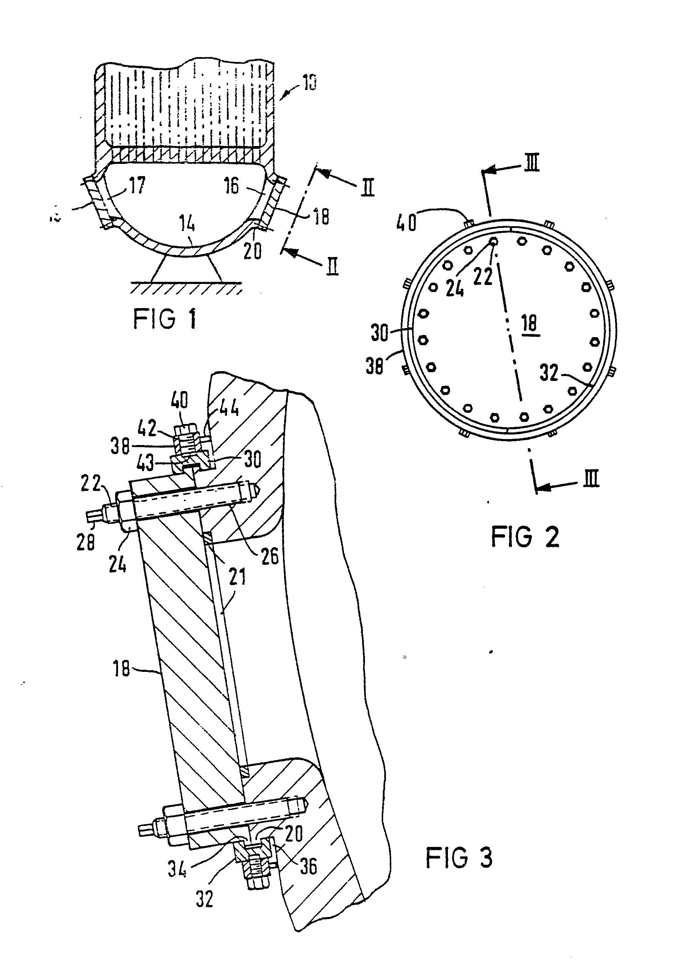

In der Fig. 1 ist mit 10 der untere Teil eines Dampferzeugers bezeichnet. Er wird von einem unter Druck stehenden radioaktiven Medium durchströmt. Dieses gibt seine Wärme im mittleren Teil des Dampferzeugers zur Dampferzeugung an ein Sekundärmedium ab. Um bei abgeschalteter Anlage zu Zwecken der Inspektion und Reparatur Zugang zu dem unteren Teil des Dampferzeugers zu bekommen sind dort Inspektionsöffnungen 16, 17 vorgesehen. Diese Inspektionsöffnungen sind während des normalen Betriebes des Dampferzeugers durch Abdeckplatten 18, 19 verschlossen. Die Gefahr, die mit unter Druck gesetzten radioaktiven Flüssigkeiten verbunden ist, macht es erforderlich, alle nur möglichen Maßnahmen zu ergreifen, um beim Schließen der Abdeckplatten Fehler zu vermeiden. Zu diesem Zweck ist eine zusätzliche Spannvorrichtung für die Abdeckplatten vorgesehen, die diese Gefahr verringert. Diese zusätzliche Spannvorrichtung ist in den Fig. 2 und 3 ausführlich beschrieben.

Jede der beiden Inspektionsöffnungen 16, 17 ist, wie die Fig. 2 und 3 anhand der Inspektionsöffnung 16 zeigen, durch je eine am Flansch 20 mittels Spannschrauben 22 und Muttern 24 angedrückte Abdeckplatte 18, 19, verschlossen. Jede dieser Spannschrauben 22 ist in ein Gewinde 26 eingeschraubt, das im Flanschbereich in das Material der Kalotte 14 des Dampferzeugers 10 eingeschnitten ist. Zwischen dem Flansch 20 und der Abdeckplatte 18 ist eine Dichtung 21 eingelassen, die die Inspektionsöffnung 16 bei aufgesetzter Abdeckplatte 18 dicht verschließt. Die Spannschrauben 22 sind an ihrem äußeren Ende als Vierkant 28 ausgebildet. Auf diese Weise können sie fest in den Flansch eingeschraubt und bei Bedarf auch wieder herausgeschraubt werden.

Eine zweite zusätzliche mehrteilige Spannvorrichtung ist für den unwahrscheinlichen Fall vorgesehen, daß die Verschraubung der Spannschrauben versagt. Dies könnte beispielsweise der Fall sein, wenn die Gewinde eine hinreichend große Zahl von Spannschrauben ausreißen, so daß die verbleibenden intakten Spannschrauben den Druck innerhalb der Kalotte 14 nicht mehr standhalten können. Diese zusätzliche Spannvorrichtung besteht im Ausführungsbeispiel aus nur zwei C-förmigen Klammern 30 und 32, die halbkreisförmig über den vorstehenden Rand 34 der Abdeckplatte 18 und einer ringförmigen Einkerbung 36 am Flansch 20 stülpbar sind. Diese Klammern werden durch einen einteiligen Haltering 38 gehalten, welcher über die über den Rand 34 der Abdeckplatte 18 und des Flansches 20 gestülpten Klammern paßt. Die beiden Klammern 30, 32 sind über acht Schrauben, die gegen die Klammern anpreßbar sind, arretiert. Jede dieser Schrauben 40 ist durch ein im Rückhaltering 38 eingebrachtes Gewindes 42 geschraubt und drückt gegen je eine an den Außenflächen der Klammern eingebrachte Einsenkung 43. Der Rückhaltering trägt außerdem vier Abstandshalter 44, die die exakte Lage des Rückhalterings zu den Klammern 30, 32 und den Rand der Abdeckplatte 18 und der ringförmigen Einkerbung 36 halten.

Die Klammern 30, 32 sind so ausgelegt, daß sie den gesamten Druck der Abdeckplatte 18 aufnehmen können. Auf diese Weise wird die Abdeckplatte auch in dem Fall, daß alle Spannschrauben reißen bis zur nächsten Inspektion, in der die Spannschrauben ausgewechselt werden können, am Flansch festgehalten.

Die Abdeckplatte 18 wird so aufgesetzt, daß sie auf die in dem Flansch 20 eingeschraubten Spannschrauben 22 aufgestülpt und durch die Muttern 24 an der Dichtung 21 angepreßt wird. Dabei wird zunächst jede der Spannschrauben 22 vorgespannt und anschließend die zugehörige Mutter 24 festgeschraubt. Danach können die beiden Klammern 30, 32 aufgesetzt und über den übergeschobenen Rückhaltering 38 gehalten werden. Zuletzt kann jede der Schrauben 40 durch die zugehörige Gewindebohrung im Rückhaltering eingeschraubt und gegen die Klammer gepreßt werden. Die Abnahme der Abdeckplatte 18 erfolgt in umgekehrter Reihenfolge.

**Patentansprüche**

1. Druckgefäß mit mindestens einer flanschartigen Öffnung und einer die Öffnung verschließenden Abdeckplatte (18) mit einer Dichtung (21) zwischen der Abdeckplatte (18) und der flanschartigen Öffnung und mit die Abdeckplatte (18) gegen die flanschartige Öffnung und die Dichtung (21) pressenden Spannschrauben (22), wobei eine zusätzliche Spannvorrichtung (30, 32, 38, 40) vorgesehen ist, die mit einem vorstehenden Rand (34) der Abdeckplatte (18) und einer ringförmigen Einkerbung (36) am Rand der flanschartigen Öffnung (20) in Eingriff bringbar ist, wobei die Spannvorrichtung (30, 32, 38, 40) mehrere den vorstehenden Rand (34) der Abdeckplatte (18) und die ringförmige Einkerbung (36) am Rand der flanschartigen Öffnung (20) miteinander verbindende Klammern (30, 32) beinhaltet, dadurch gekennzeichnet, daß die Klammern (30, 32) von einem gemeinsamen Rückhaltering (38) umfaßt werden und daß der Rückhaltering (38) mit Gewindelöchern (42) für zusätzliche Schrauben (40) versehen ist, die die Klammern (30, 32) in die ringförmige Einkerbung (36) am Rand der flanschartigen Öffnung (20) und über den vorstehenden Rand (34) der Abdeckplatte (18) pressen.

2. Druckgefäß nach Anspruch 1, dadurch gekennzeichnet, daß die Klammern (30, 32) einen C-förmigen Querschnitt haben.

3. Druckgefäß nach Anspruch 1, dadurch gekennzeichnet, daß die Klammern (30, 32) an ihren Außenseiten Einsenkungen (43) für die Schrauben (40) tragen.

4. Druckgefäß nach Anspruch 1, dadurch gekennzeichnet, daß nur zwei den Umfang der Abdeckplatte (18) und der flanschartigen Öffnung (20) je halbkreisförmig umschließende Klammern (30, 32) verwendet sind.

5. Druckgefäß nach Anspruch 1, dadurch gekennzeichnet, daß der Rückhaltering (38) mehrere mit dem Druckgefäß (10) in Eingriff bringbare Abstandshalter (44) trägt.

6. Druckgefäß nach Anspruch 1, dadurch gekennzeichnet, daß die Spannschrauben (22) mit ihrem einen Ende durch entsprechende Löcher oder Ausnehmungen in der Abdeckplatte (18) hindurchsteckbar und in der Wandung (20) des Druckbehälters (14) einschraubbar sind und an ihrem gegenüberliegenden Ende mindestens je eine mit der aufgesetzten Abdeckplatte (18) in Eingriff bringbare Mutter (24) tragen.

7. Druckgefäß nach Anspruch 1, dadurch gekennzeichnet, daß die flanschartige Öffnung (20) Teil eines Dampferzeugers (10) ist.

8. Druckgefäß nach Anspruch 1, dadurch gekennzeichnet, daß die durch die Abdeckplatte verschlossene Öffnung (16, 17) eine Einstiegsöffnung ist.

**Claims**

1. Pressure vessel with at least one flange-like opening and a cover plate (18) which closes the opening, with a seal (21) between the cover plate (18) and the flange-like opening and with tightening screws (22) pressing the cover plate (18) against the flange-like opening and the seal (21), whereby an additional tightening device (30, 32, 38, 40) is provided, which can be engaged with a protruding rim (34) of the cover plate (18) and a ring-shaped undercut (36) on the edge of the flange-like opening (20), whereby the tightening device (30, 32, 38, 40) comprises several clamps (30, 32), connecting the protruding rim (34) of the cover plate (18) and the ring-shaped undercut (36) on the edge of the flange-like opening (20) with each other, characterised in that the clamps (30, 32) are surrounded by a common retaining ring (38) and that the retaining ring (38) is provided with threaded holes (42) for additional screws (40), which press the clamps (30, 32) into the ring-shaped undercut (36) on the edge of the flange-like opening (20) and over the protruding rim (34) of the cover plate (18).

2. A pressure vessel as claimed in claim 1, characterised in that the clamps (30, 32) have a C-shaped cross-section.

3. A pressure vessel as claimed in claim 1, characterised in that the clamps (30, 32) have depressions (43) on their outer sides for the screws (40).

4. A pressure vessel as claimed in claim 1, characterised in that only two semicircular clamps (30, 32) are used to encircle the perimeter of the cover plate (18) and of the flange-like opening (20).

5. A pressure vessel as claimed in claim 1, characterised in that the retaining ring (38) carries several spacers (44) which can be engaged with the pressure vessel (10).

6. A pressure vessel as claimed in claim 1, characterised in that the tightening screws (22) can at one end be inserted through corresponding holes or recesses in the cover-plate (18) and may be screwed in place in the wall (20) of the pressure vessel (14), and carry at their opposite end in each case at least one nut (24), which can be engaged with the positioned cover-plate.

7. A pressure vessel as claimed in claim 1, characterised in that the flange-like opening (20) is part of a steam generator (10).

8. A pressure vessel as claimed in claim 1, characterised in that the opening (16, 17) closed by the cover-plate is an access opening.

**Revendications**

1. Cuve de pression avec au moins une ouverture en forme de bride et un couvercle (18) obturant cette ouverture, avec un moyen d'étanchéité (21) entre le couvercle d'obturation (18) et l'ouverture en forme de bride et avec des vis de serrage (22) qui pressent le couvercle d'obturation entre l'ouverture en forme de bride et les moyens d'étanchéité (21), du type dans lequel il est prévu un dispositif de serrage supplémentaire (30, 32, 38, 40) qui est susceptible d'être amené en prise avec un bord saillant (34) du couvercle d'obturation (18) et avec une gorge annulaire (36) ménagée au bord de l'ouverture en forme de bride (20), et dans laquelle le dispositif de serrage (30, 32, 38, 40) comporte plusieurs crochets (30, 32) qui relient le bord saillant du couvercle d'obturation (18) et la gorge annulaire (36) ménagée au bord de l'ouverture en forme de bride (20), caractérisée par le fait, que les crochets (30, 32) sont entourés d'un anneau de retenue commun (38), et que l'anneau de retenue (38) est pourvu de trous filetés (42) pour des vis supplémentaires (40) qui pressent les crochets (30, 32) dans la gorge annulaire (36) ménagée au bord de l'ouverture en forme de bride (20) et sur le bord saillant (34) du couvercle d'obturation (18).

2. Cuve de pression selon la revendication 1, caractérisée par le fait que les crochets (30, 32) présentent une section transversale en forme de C.

3. Cuve de pression selon la revendication 1, caractérisée par le fait que les crochets (30, 32) portent, sur leurs côtés extérieurs des cuvettes (43) pour les vis (40).

4. Cuve de pression selon la revendication 1, caractérisée par le fait que l'on utilise seulement deux crochets (30, 32) qui entourent chacun, suivant un demi-cercle, la périphérie du couvercle d'obturation (18) et l'ouverture en forme de bride (20).

5. Cuve de pression selon la revendication 1, caractérisée par le fait que l'anneau de retenue (38) porte plusieurs entretoises (44) qui sont susceptibles d'être amenées en prise avec la cuve de pression (10).

6. Cuve de pression selon la revendication 1, caractérisée par le fait que les vis de serrage (22) sont susceptibles d'être insérées, par l'une de leurs extrémités à travers des trous correspondants ou des ouvertures correspondantes ménagés dans la plaque d'obturation (18) et sont susceptibles d'être vissés dans la paroi (20) de la cuve de pression (14) alors que chacune d'elles porte, à son extrémité opposée, un écrou (24) qui est susceptible d'être amené en prise avec la plaque d'obturation (18) mise en place.

7. Cuve de pression selon la revendication 1, caractérisée par le fait que l'ouverture (20) en forme de bride constitue un élément d'un générateur de vapeur (10).

6. Cuve de pression selon la revendication 1, caractérisée par le fait que l'ouverture (16, 17) qui est fermée par la plaque d'obturation est une ouverture d'accès.

FIG 1

FIG 2

FIG 3